# EUROPEAN PATENT APPLICATION

(11) **EP 2 306 110 A1**
(43) Date of publication of application: **06.04.2011**
(21) Application number: 09754409.2
(22) Date of filing: 22.05.2009
(51) Int. Cl.: F24H 1/00, C02F 1/32, C02F 1/48, C02F 1/50, C02F 1/78, F24D 17/00

(54) **HEAT PUMP TYPE HOT WATER SUPPLY DEVICE AND METHOD OF STERILIZING HOT WATER**

(30) Priority: 28.05.2008 JP 2008140044
(71) Applicant: Daikin Industries, Ltd., Osaka-shi, Osaka 530-8323 (JP)
(72) Inventor: TANAKA, Toshio, Sakai-shi Osaka 591-8511 (JP); KAGAWA, Kenkichi, Sakai-shi Osaka 591-8511 (JP); MIZUTANI, Kazuhide, Sakai-shi Osaka 591-8511 (JP); FUJIYOSHI, Ryuusuke, Sakai-shi Osaka 591-8511 (JP)
(74) Representative: HOFFMANN EITLE
(86) International application number: PCT/JP2009/002266
(87) International publication number: WO 2009/144900

(57) **Abstract**

A heat pump type hot-water supply device (1) including a hot water storage tank (5) and a hot water circulation circuit (50) is provided with a bactericidal component generator (60), such as a discharge device (65) for generating a streamer discharge, in order to prevent development of bacteria, such as Legionella, at low cost. The bactericidal component generator (60) generates, at a temperature lower than or equal to that of hot water in a hot water circulation circuit (50), a bactericidal component so as to bring about an effect on the hot water.

## Description

### TECHNICAL FIELD

The present invention relates to heat pump type hot-water supply devices including a hot water storage tank and a hot water circulation circuit, and to methods of sterilizing hot water for preventing development of bacteria, such as Legionella, even if the temperature of the hot water drops.

### BACKGROUND ART

Conventional heat pump type hot-water supply devices including a heat pump thermal source system, a hot water storage tank and a hot water circulation circuit (see Patent Document 1) are generally configured to heat water using cheap nighttime power and store the hot water in the hot water storage tank and then provide the stored hot water for hot water supply or to a bathtub when needed. Such heat pump type hot-water supply devices are configured to allow the hot water supplied to the bathtub from the hot water storage tank to be circulated in the hot water circulation circuit for reheating.

### CITATION LIST

### PATENT DOCUMENT

PATENT DOCUMENT 1: Japanese Patent Publication No. H10-122684

### SUMMARY OF THE INVENTION

### TECHNICAL PROBLEM

In general, in heat pump type hot-water supply devices, chlorine is easily removed from hot water in the hot water storage tank. Therefore, when the water temperature drops, bacteria, such as Legionella, tend to develop. In order to prevent this problem, it is effective to reheat the water to a temperature at which bacteria cannot grow while circulating the water in a pipe of the hot water circulation circuit.

If the hot water circulation circuit is a circuit for reheating, as in the case of Patent Document 1, hot water can be heated in the hot water circulation circuit; however, since the temperature at which no bacteria grow is higher than the temperature of hot water supplied to the bathtub, it is necessary to always maintain the hot water in the hot water circulation circuit higher than its service temperature. If the hot water circulation circuit is a circuit for circulating hot water for hot water supply, it is necessary to maintain the hot water at a high temperature by providing a dedicated hot water heating unit (such as a heater or heat exchanger) in the hot water circulation circuit.

However, because of requiring considerable energy to heat the hot water, the above method leaves the problem that the running cost of the devices is expensive.

The present invention has been made in view of the above problems, and it is an object of the present invention to prevent development of bacteria, such as Legionella, at low cost in heat pump type hot-water supply devices including a hot water storage tank and a hot water circulation circuit.

### SOLUTION TO THE PROBLEM

A first aspect of the present invention is directed to a heat pump type hot-water supply device including: a heat pump thermal source system (10) for generating hot water by applying heat to water; a hot water storage tank (5) for storing the generated hot water; and a hot water circulation circuit (50) connected to the hot water storage tank (5) and configured to be capable of tapping hot water.

The heat pump type hot-water supply device is **characterized in that** the hot water circulation circuit (50) is provided with a bactericidal component generator (60) for, at a temperature lower than or equal to that of the hot water in the hot water circulation circuit (50), that is, without application of heat to the hot water, generating a bactericidal component so as to bring about an effect on the hot water. Note that, in this specification, water circulating in the hot water circulation circuit (50) is referred to as "hot water"; however, the term "hot water" also refers to water cooled down during the circulation.

According to the first aspect of the present invention, when hot water circulates in the hot water circulation circuit (50), the bactericidal component generated by the bactericidal component generator (60) acts on bacteria, such as Legionella, in the hot water. Once the bactericidal component acts on Legionella, the growth of Legionella is prevented even when the hot water in the hot water circulation circuit (50) has been reduced in temperature. That is, bacteria growth can be prevented without heating the hot water to a temperature at which no bacteria grow.

A second aspect of the present invention is **characterized in that**, in the first aspect of the present invention, the bactericidal component generator (60) includes a discharge device (65).

According to the second aspect of the present invention, an electric discharge is generated in the discharge device (65) without application of heat to the hot water (at ambient temperatures), thereby generating low temperature plasma. With the low temperature plasma, active species, such as ozone, are generated. These active species then act on Legionella in the hot water as a bactericidal component, and thus sterilization is performed.

A third aspect of the present invention is **characterized in that**, in the second aspect of the present invention, the discharge device (65) is disposed in the air, and a processing unit (70) is provided, which is connected to the hot water circulation circuit (50) so as to bring the active species generated by the electric discharge into contact with the hot water.

According to the third aspect of the present invention, sterilization is performed by that the active species are sent into the processing unit (70) from the discharge device (65) disposed in the air and then come into contact with the hot water.

A fourth aspect of the present invention is **characterized in that**, in the second aspect of the present invention, the discharge device (65) is disposed in water and the processing unit (70) is provided, which is connected to the hot water circulation circuit (50) so as to treat the hot water with the active species generated by the electric discharge.

According to the fourth aspect of the present invention, sterilization is performed by that the active species generated by the discharge device (65) disposed in water come into contact with the hot water in the processing unit (70).

A fifth aspect of the present invention is **characterized in that**, in the second aspect of the present invention, the discharge device (65) is a streamer discharge device (66) for generating a streamer discharge.

According to the fifth aspect of the present invention, an electric discharge is generated in the streamer discharge device (66) without application of heat to the hot water (at ambient temperatures), thereby generating low temperature plasma. With the low temperature plasma, active species including ozone and the like and having a strong sterilizing action are generated. These active species then act on Legionella in the hot water as a bactericidal component, and thus sterilization is performed.

A sixth aspect of the present invention is characterized by, in the fifth aspect of the present invention, including: a water spraying mechanism (80); and the processing unit (70) connected to the hot water circulation circuit (50) so as to bring sprayed water droplets and the active species generated by the streamer discharge device (66) into contact with each other.

According to the sixth aspect of the present invention, the water droplets sprayed from the water spraying mechanism (80) and the active species generated by the streamer discharge device (66) come into contact with each other in the processing unit (70). Herewith, the water droplets and the active species come into contact over a large region. In addition, since the interface between the air and the water in the processing unit (70) is disturbed at a place where the water droplets fall onto the surface of the water, the active species are taken up into the water, which also contributes to contact between the water and the active species over a large region.

A seventh aspect of the present invention is characterized by, in the fifth aspect of the present invention, including: a water film forming mechanism (85); and the processing unit (70) connected to the hot water circulation circuit (50) so as to bring a formed water film and the active species generated by the streamer discharge device (66) into contact with each other.

According to the seventh aspect of the present invention, the water film formed with droplets from the water film forming mechanism (85) and the active species generated by the streamer discharge device (66) come into contact with each other in the processing unit (70). Herewith, the water film and the active species come into contact over a large region. In addition, since the interface between the air and the water in the processing unit (70) is disturbed at a place where droplets from the water film fall onto the surface of the water, the active species are taken up into the water, which also contributes to contact between the water and the active species over a large region.

An eighth aspect of the present invention is **characterized in that**, in the first aspect of the present invention, the bactericidal component generator (60) is made of an ozone generating device (95).

According to the eighth aspect of the present invention, ozone is generated by the ozone generating device (95) at ambient temperatures. The ozone then acts on Legionella in the hot water as a bactericidal component, and thus sterilization is performed.

A ninth aspect of the present invention is **characterized in that**, in the first aspect of the present invention, the bactericidal component generator (60) is made of an ultraviolet light generator (96).

According to the ninth aspect of the present invention, ultraviolet light is generated by the ultraviolet light generator (96) at substantially ambient temperatures. The ultraviolet light (and ozone included therein) then acts on Legionella in the hot water as a bactericidal component, and thus sterilization is performed.

Tenth to twelfth aspects of the present invention are characterized by, in the second, eighth and ninth aspects of the present invention, respectively, including an air bubble supplier (88) for supplying the bactericidal component generated by the bactericidal component generator (60) into water together with air bubbles.

According to the tenth to twelfth aspects of the present invention, the bactericidal component (active species, such as ozone) generated by the bactericidal component generator (60) is supplied into the water of the hot water circulation circuit (50) together with air bubbles by air bubble supply. Herewith, bacteria and the active species come into contact with each other in the water, and thus sterilization is performed.

A thirteenth aspect of the present invention is directed to a hot water sterilization method used in heat pump type hot-water supply devices including: the heat pump thermal source system (10) for generating hot water by applying heat to water; the hot water storage tank (5) for storing the generated hot water; and the hot water circulation circuit (50) connected to the hot water storage tank (5), and is characterized by including the step of generating, at a temperature lower than or equal to that of hot water in the hot water circulation circuit (50), a bactericidal component so as to bring about an effect on the hot water circulating in the hot water circulation circuit (50).

According to the thirteenth aspect of the present invention, when hot water circulates in the hot water circulation circuit (50), the bactericidal component generated without application of heat to the hot water acts on bacteria, such as Legionella, in the hot water. Once the bactericidal component acts on Legionella, the growth of Legionella is prevented even when the hot water in the hot water circulation circuit (50) has been reduced in temperature. That is, bacteria growth can be prevented without heating the hot water to a temperature at which no bacteria grow.

### ADVANTAGES OF THE INVENTION

According to the present invention, by providing the bactericidal component generator (60) for generating, without application of heat to hot water, a bactericidal component so as to bring about an effect on the hot water, the bactericidal component acts on bacteria, such as Legionella, when hot water circulates in the hot water circulation circuit (50). Consequently, when the hot water in the hot water circulation circuit (50) has been reduced in temperature, the growth of Legionella can be prevented without heating the hot water to a temperature at which no bacteria grow. Since it is configured to generate the bactericidal component at a temperature lower than or equal to that of the hot water in the hot water circulation circuit (50), a smaller amount of energy is required to be fed compared to heating the hot water using a heater or the like. As a result, it is possible to prevent development of bacteria, such as Legionella, at low cost in heat pump type hot-water supply devices having the hot water storage tank (5) and the hot water circulation circuit (50).

According to the second aspect of the present invention above, it is possible to treat Legionella in hot water by forming low temperature plasma by generating an electric discharge in the discharge device (65) without application of heat to the hot water, then generating active species, such as ozone, by the low temperature plasma, and using these active species as a bactericidal component. Using the active species generated by an electric discharge requires a smaller amount of energy to be fed for sterilization compared to heating the hot water.

According to the third aspect of the present invention above, it is possible to perform sterilization by sending active species into the processing unit (70) from the discharge device (65) disposed in the air and thereby bringing the active species into contact with the hot water. With the third aspect of the present invention also, the amount of energy to be fed for sterilization is reduced by using the active species generated by an electric discharge.

According to the fourth aspect of the present invention above, sterilization is performed by that the active species generated by the discharge device (65) disposed in water come into contact with the hot water in the processing unit (70). With the fourth aspect of the present invention also, the amount of energy to be fed for sterilization is reduced by using the active species generated by an electric discharge. In addition, since the active species generated in water come into direct contact with bacteria, it is possible to enhance the sterilization effect.

According to the fifth aspect of the present invention above, it is possible to treat Legionella in hot water by forming low temperature plasma by generating an electric discharge in the streamer discharge device (66) without application of heat to the hot water, then generating, by the low temperature plasma, active species including ozone and having a strong sterilizing action, and using these active species as a bactericidal component. With the fifth aspect of the present invention also, the amount of energy to be fed for sterilization is reduced by using the active species generated by an electric discharge.

According to the sixth aspect of the present invention above, the water droplets sprayed from the water spraying mechanism (80) and the active species generated by the streamer discharge device (66) come into contact with each other in the processing unit (70), and herewith the water droplets and the active species come into contact over a large region. In addition, since the interface between the air and the water in the processing unit (70) is disturbed at a place where the water droplets fall to the surface of the water, the active species are taken up into the water, which also contributes to contact between the water and the active species over a large region. Accordingly, it is possible to enhance the bactericidal performance.

According to the seventh aspect of the present invention above, the water film formed with droplets from the water film forming mechanism (85) and the active species generated by the streamer discharge device (66) come into contact with each other in the processing unit (70), and herewith the water film and the active species come into contact over a large region. In addition, since the interface between the air and the water in the processing unit (70) is disturbed at a place where droplets from the water film fall onto the surface of the water, the active species are taken up into the water, which also contributes to contact between the water and the active species over a large region. Accordingly, it is possible to enhance the bactericidal performance.

According to the eighth aspect of the present invention above, it is possible to treat Legionella in hot water by generating ozone by the ozone generating device (95) without application of heat to the hot water and using the ozone as a bactericidal component. Using ozone generated without application of heat to the hot water requires a smaller amount of energy to be fed for sterilization compared to heating the hot water.

According to the ninth aspect of the present invention above, it is possible to treat Legionella in hot water by generating ultraviolet light by the ultraviolet light generator (96) and using the ultraviolet light (and ozone included therein) as a bactericidal component. Generating ultraviolet light at ambient temperatures requires a smaller amount of energy to be fed for sterilization compared to heating the hot water.

According to the tenth to twelfth aspects of the present invention above, the bactericidal component (active species, such as ozone) generated by the bactericidal component generator (60) is supplied into the water of the hot water circulation circuit (50) together with air bubbles by air bubble supply. Herewith, bacteria and the active species come into contact with each other in the water, and thus sterilization is performed. In this case also, using the active species generated at a temperature lower than or equal to that of the hot water in the hot water circulation circuit (50) requires a smaller amount of energy to be fed for sterilization compared to heating the hot water, and it is possible to enhance the sterilization performance since the active species come into direct contact with bacteria in the water.

According to the thirteenth aspect of the present invention above, since it is configured to generate, at a temperature lower than or equal to that of the hot water in the hot water circulation circuit (50), a bactericidal component so as to bring about an effect on the hot water, the bactericidal component acts on bacteria, such as Legionella, when hot water circulates in the hot water circulation circuit (50). Consequently, when the hot water in the hot water circulation circuit (50) has been reduced in temperature, the growth of Legionella can be prevented without heating the hot water to a temperature at which no bacteria grow. Since it is configured to generate the bactericidal component without application of heat to the hot water, a smaller amount of energy is required to be fed compared to heating the hot water using a heater or the like. As a result, it is possible to prevent development of bacteria, such as Legionella, at low cost in heat pump type hot-water supply devices having the hot water storage tank (5) and the hot water circulation circuit (50).

### BRIEF DESCRIPTION OF THE DRAWINGS

[FIG. 1] FIG. 1 is a piping system diagram of a heat pump type hot-water supply device according to an embodiment of the present invention.
[FIG. 2] FIG. 2 is a schematic configuration diagram of a bactericidal component generator provided in the heat pump type hot-water supply device of FIG. 1.
[FIG. 3] FIG. 3 is a schematic configuration diagram showing a first modification of the bactericidal component generator.
[FIG. 4] FIG. 4 is a schematic configuration diagram showing a second modification of the bactericidal component generator.
[FIG. 5] FIG. 5 is a schematic configuration diagram showing a third modification of the bactericidal component generator.
[FIG. 6] FIG. 6 is a schematic configuration diagram showing a fourth modification of the bactericidal component generator.
[FIG. 7] FIG. 7 is a schematic configuration diagram showing a fifth modification of the bactericidal component generator.
[FIG. 8] FIG. 8 is a schematic configuration diagram showing a sixth modification of the bactericidal component generator.
[FIG. 9] FIG. 9 is a schematic configuration diagram showing a seventh modification of the bactericidal component generator.

### DESCRIPTION OF EMBODIMENTS

Hereinafter, an embodiment of the present invention is specifically described with reference to the drawings.

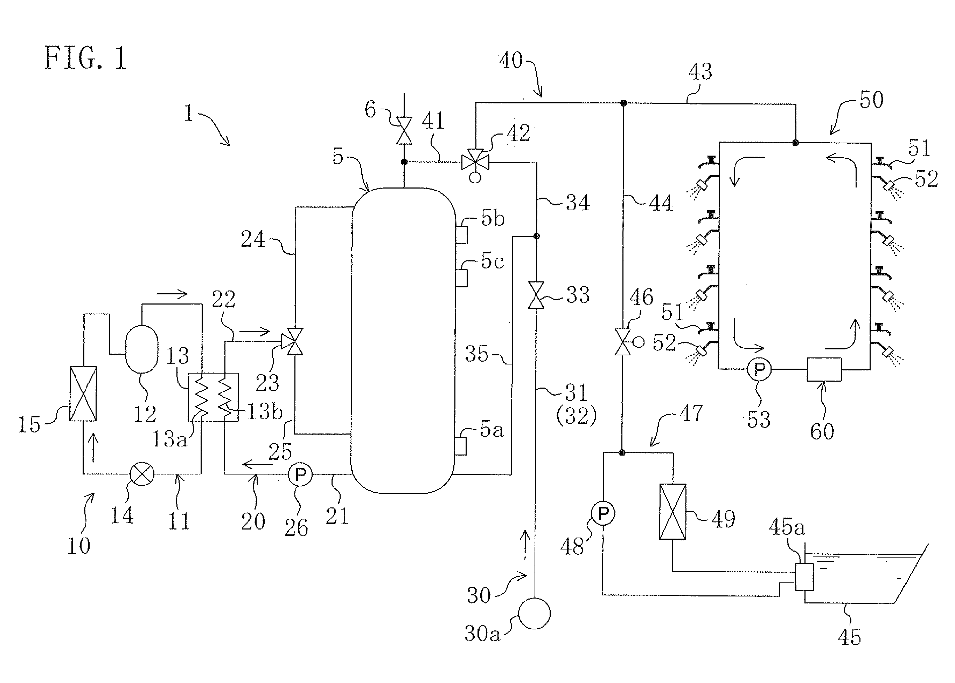

FIG. 1 is a circuit diagram of a heat pump type hot-water supply device (1) according to the embodiment of the present invention. The heat pump type hot-water supply device (1) includes: a heat pump thermal source system (10) for generating hot water by applying heat to water; a hot water storage tank (5) for storing the generated hot water; and a hot water tap circuit (40) connected to the hot water storage tank (5) so as to tap hot water from the hot water storage tank (5).

The heat pump thermal source system (10) is made of a refrigerant circuit (11) for operating a vapor compression refrigeration cycle. The refrigerant circuit (11) is a closed circuit configured in such a manner that a compressor (12) for compressing a refrigerant, a hot water heat exchanger (13) in which a high pressure refrigerant releases heat to water (hot water), an expansion valve (expansion mechanism) (14) having an adjustable degree of opening and configured to reduce the pressure of the high pressure refrigerant to a low level, and an air heat exchanger (15) in which a low pressure refrigerant absorbs heat from the air are collected by refrigerant pipes one to the other in order.

The hot water heat exchanger (13) includes: a refrigerant flow path (13a) in which a refrigerant of the refrigerant circuit (11) flows; and a hot water flow path (13b) in which hot water of a hot water heating circuit (20) to be described below flows. The hot water heat exchanger (13) is configured in such a manner that the refrigerant and the hot water flow in opposite directions from each other.

The hot water heat exchanger (13) and the hot water storage tank (5) are connected by the hot water heating circuit (20). The hot water heating circuit (20) includes: a water intake pipe (21) connected to a lower part of the hot water storage tank (5) and to a lower end of the hot water flow path (13b) of the hot water heat exchanger (13); and a hot water feeding pipe (22) whose one end is connected to an upper end of the hot water flow path (13b) of the hot water heat exchanger (13). The other end of the hot water feeding pipe (22) branches into two via a three-way valve (23), and a first hot water feeding branch pipe (24) is connected to an upper part of the hot water storage tank (5) and a second hot water feeding branch pipe (25) is connected to a position, within the lower part of the hot water storage tank (5), located above the water intake pipe (21). The water intake pipe (21) is provided with a hot water pump (26) for withdrawing water (hot water) in the hot water storage tank (5) through the water intake pipe (21) of the hot water heating circuit (20) to the hot water flow path (13b) of the hot water heat exchanger (13) and also bringing the water back to the hot water storage tank (5) through the hot water feeding pipes (22-24).

Connected to the hot water storage tank (5) are a water supply circuit (30) and the hot water tap circuit (40). The water supply circuit (30) includes a water supply pipe (31) connected to a water supply source (30a). The water supply pipe (31) includes: a water supply main pipe (32) having a pressure reducing valve (33) thereon; and a first water supply branch pipe (34) and a second water supply branch pipe (35) branched from the water supply main pipe (32). The first water supply branch pipe (34) is connected to the hot water tap circuit (40) via a mixing valve (42), and the second water supply branch pipe (35) is branched from the water supply main pipe (32) and connected to the lower part of the hot water storage tank (5).

The hot water tap circuit (40) includes: a hot water tap main pipe (41) connected to the hot water storage tank (5) and having the mixing valve (42) thereon; and a first hot water tap branch pipe (43) and a second hot water tap branch pipe (44) branched from the hot water tap main pipe (41). The first hot water tap branch pipe (43) is a branch pipe for hot water supply and is connected to faucets (51) and shower nozzles (52). The second hot water tap branch pipe (44) is a branch pipe for supplying hot water to a bathtub (45).

The hot water tap main pipe (41) is provided with a safety valve (6). The safety valve (6) is a valve for releasing pressure so that the pressure in the hot water storage tank (5) does not reach or exceed a predetermined value.

The hot water storage tank (5) is provided with a water-supply water level sensor (5a) in order to supply water to the hot water storage tank (5) when the water level is low. The hot water storage tank (5) is also provided with hot-water-heating water level sensors (5b and 5c) so that hot water heated by the hot water heat exchanger (13) is supplied to the hot water storage tank (5) from either the first hot water feeding branch pipe (24) or the second hot water feeding branch pipe (25) by appropriately operating the three-way valve (23) in the hot water heating circuit (20) according to the water level of the hot water storage tank (5).

Connected to the first hot water tap branch pipe (43) is a hot water circulation circuit (50). The hot water circulation circuit (50) is a closed circuit in which hot water circulates, and multiple faucets (51) and multiple shower nozzles (52) are connected thereto. The hot water circulation circuit (50) is provided with a hot water supply pump (53) and a bactericidal component generator (60) for generating, at a temperature lower than or equal to that of the hot water in the hot water circulation circuit (50) (without application of heat to the hot water), a bactericidal component so as to bring about an effect on the hot water. The bactericidal component generator (60) performs sterilization of hot water not by using a bactericidal agent or the like preliminarily packed in a container, but by generating a bactericidal component by an electric discharge or other means.

The second hot water tap branch pipe (44) is provided with an on-off valve (46), and a reheating circuit (47) is connected, to the second hot water tap branch pipe (44), on the downstream side of the on-off valve (46). The reheating circuit (47) is connected to the bathtub (45), and a connecting part (45a) thereof is provided with a hot water supply port for supplying hot water from the reheating circuit (47) to the bathtub (45) and a hot water suction port for sucking hot water from the bathtub (45) to the reheating circuit (47) although the details are not shown in the figure. The reheating circuit (47) is provided with a bathtub water pump (48) and a hot water heating unit (49) for reheating hot water.

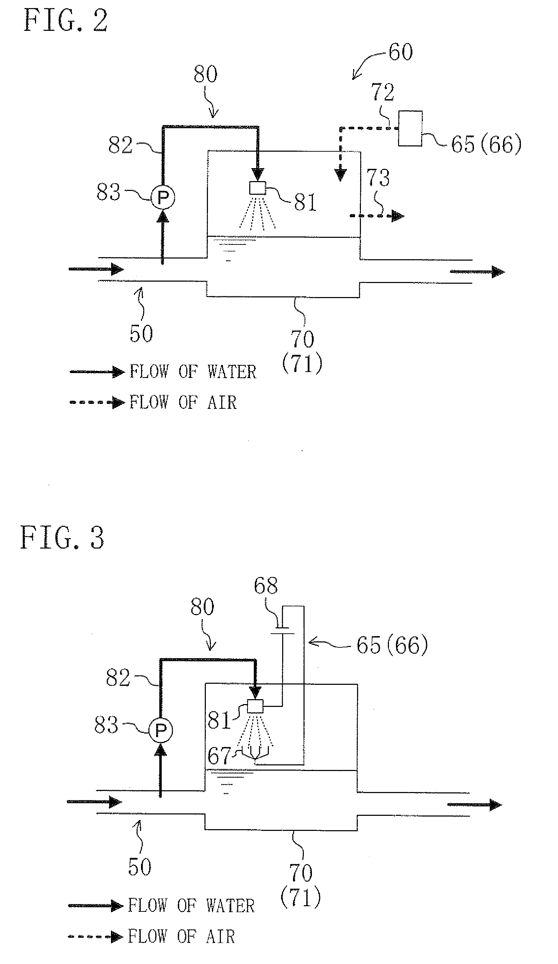

As shown in FIG. 2, the bactericidal component generator (60) includes a discharge device (65) disposed in the air. The bactericidal component generator (60) is provided with a processing unit (70) which is connected to the hot water circulation circuit (50) so as to bring active species generated by an electric discharge into contact with hot water. The active species includes ozone, electrons, ions, and other radicals (hydroxyl radicals, excited oxygen molecules, excited nitrogen molecules and the like).

The discharge device (65) is made of a streamer discharger (streamer discharge device) (66) including a not-shown electric discharge electrode, a not-shown counter electrode and a not-shown high-voltage power supply and configured to generate a streamer discharge between the two electrodes. The processing unit (70) is made of a processing room (71) provided at a part of the hot water circulation circuit (50), and the processing room (71) and the streamer discharger (66) are connected to each other by an air supply passage (72). It is preferred that the air supply passage (72) be provided with a fan (not shown) for blowing air from the streamer discharger (66) toward the processing room (71). In addition, an air exhaust passage (73) for exhausting air in the processing room (71) is connected to the processing room (71). The air exhaust passage (73) may be provided with a post-processing unit (not shown).

The streamer discharge has a function of generating various active species including ozone, and bacteria, such as Legionella, are treated by having the generated active species act on water. The post-processing unit is designed to prevent untreated ozone and the like from being released into the atmosphere, and may be configured using a catalyst. Note that since ozone is an unstable molecule and will be changed into oxygen if left untreated, it is not always necessary to provide the post-processing unit, for example, if the concentration of ozone in the exhaust air is low. In addition, as so-called "ozone water" in which ozone is dissolved in water turns back to regular water if left untreated, ozone treatment is not required unless the concentration of ozone is high.

The processing room (71) is provided with a spray nozzle (81). The spray nozzle (81) is connected to a downstream end of a spray water supply pipe (82) which has a water spray pump (83) in a pipe passage thereof, and an upstream end of the spray water supply pipe (82) is connected to a pipe provided on the upstream side of the processing room (71) in the hot water circulation circuit (50). The spray water supply pipe (82), the water spray pump (83) and the spray nozzle (81) make up a water spraying mechanism (80), which is configured to, in the processing room (71), bring sprayed water droplets and the active species generated by the streamer discharge device (66) into contact with each other.

### -Operation-

Next is described the operation of the heat pump type hot-water supply device (1). Note that the following operation is controlled by a not-shown controller.

In the case of heating water of the hot water storage tank (5) and storing hot water in the hot water storage tank (5), the heat pump thermal source system (10) is operated. In the heat pump thermal source system (10), a high pressure refrigerant discharged from the compressor (12) releases heat to water (hot water) flowing in the hot water flow path (13b) to heat the water (hot water) when flowing through the refrigerant flow path (13a) of the hot water heat exchanger (13). The refrigerant after releasing heat to hot water is reduced in pressure by the expansion valve (14) to be a low pressure two-phase refrigerant. When passing through the air heat exchanger (15), the low pressure refrigerant absorbs heat from the air and evaporates to become a low pressure gas refrigerant, which is then sucked into the compressor (12). The refrigerant is compressed by the compressor (12) to a high pressure and then discharged from the compressor (12). By repeating the operation in which the refrigerant circulates in the refrigerant circuit (11) in the above described manner, water (hot water) is heated in the hot water flow path (13b) of the hot water heat exchanger (13).

In the hot water heating circuit (20), the hot water pump (26) is driven. At this point, the pressure reducing valve (33) is opened while a port of the mixing valve (42) on the water supply circuit (30) side is closed, and thereby water is supplied from the water supply source (30a) to the hot water storage tank (5) as required. The water-supply water level sensor (5a) provided in the hot water storage tank (5) is used in order to supply water to the hot water storage tank (5) when the water level of the hot water storage tank (5) is low.

The water in the hot water storage tank (5) is sucked out of the hot water storage tank (5) by the hot water pump (26) and then flows from the water intake pipe (21) to the hot water heat exchanger (13). In the hot water heat exchanger (13), hot water flowing through the hot water flow path (13b) is heated by absorbing heat from the refrigerant flowing through the refrigerant flow path (13a). The hot water heated by the hot water heat exchanger (13) flows through the hot water feeding pipe (22), and is then supplied to the hot water storage tank (5) from either the first hot water feeding branch pipe (24) or the second hot water feeding branch pipe (25) by appropriately operating the three-way valve (23) according to the water level of the hot water storage tank (5). The hot-water-heating water level sensors (5b and 5c) provided in the hot water storage tank (5) are used for this purpose.

A hot water tap operation is performed by operating the hot water supply pump (53) or the bathtub water pump (48) while opening or closing the port of the mixing valve (42) on the water supply side according to the temperature of hot water supply. When the hot water supply pump (53) is operated, hot water in the hot water storage tank (5) is sucked to the hot water circulation circuit (50) through the hot water tap main pipe (41) and the first hot water tap branch pipe (43), and circulates in the hot water circulation circuit (50). The hot water flowing in the hot water circulation circuit (50) is discharged from the faucets (51) and the shower nozzles (52) if turned on.

In the case of filling the bathtub (45) with hot water of the hot water storage tank (5), the bathtub water pump (48) is operated while the on-off valve (46) is open. The temperature of the bathtub water is controlled by adjusting the ratio of hot water to cold water (water supply) using the mixing valve (42). In the case of reheating the bathtub water, the bathtub water pump (48) is operated while the on-off valve (46) is closed, and then the hot water heating unit (49) is operated. By doing this, the bathtub water is heated by the hot water heating unit (49) as circulating in the reheating circuit (47) and thus the temperature of the bathtub water is controlled.

On the other hand, in conventional hot-water supply devices, bacteria, such as Legionella, tend to develop when hot water circulating in the hot water circulation circuit (50) is reduced in temperature. By contrast, in the hot-water supply device according to this embodiment, the development of Legionella is prevented by the bactericidal component generator (60).

Specifically, in the streamer discharger (66) provided in the bactericidal component generator (60), a streamer discharge is generated between the not-shown electric discharge electrode and counter electrode, and thereby low temperature plasma is formed in the region. Due to this low temperature plasma, various active species including ozone are generated and sent through the air supply passage (72) to the processing room (71). In the processing room (71), hot water flowing in the hot water circulation circuit (50) is sprayed from the spray nozzle (81), and the sprayed water (hot water) and the active species come into contact with each other. The sprayed water being blown onto the surface of the water disturbs the interface between the water and the air, and thereby the active species are also supplied into the water of the processing room (71). Since the active species have the effect of degrading bacteria, Legionella included in the water is degraded, and thus the water is sterilized. Accordingly, the hot water is maintained clean by circulating in the hot water circulation circuit (50).

Ozone remaining in the exhaust air can be treated in the post-processing unit (not shown) during passing through the air exhaust passage (73). Even if the post-processing unit is not provided, ozone will be changed into oxygen if left untreated. Accordingly, exhaust air with no ozone or a low concentration of ozone is released to the atmosphere.

### -Advantages of EMBODIMENT-

According to this embodiment, providing the bactericidal component generator (60) in the hot water circulation circuit (50) makes it possible to prevent the growth of bacteria, such as Legionella, even if hot water in the hot water circulation circuit (50) is reduced in temperature. This embodiment has also adopted a configuration in which active species are generated at ambient temperatures without application of heat to the hot water by using the electric discharger (66) for generating a streamer discharge as the bactericidal component generator (60), and therefore a considerably smaller amount of energy is required to operate this embodiment, compared to the case of heating the hot water using heating means, such as a heater. Accordingly, this embodiment can be operated with saved energy as compared to conventional hot-water supply devices, hence reducing the running cost.

### -Modifications of EMBODIMENT-

### (First Modification)

In the above embodiment, the streamer discharger (66) having an electric discharge electrode and a counter electrode is provided separately from the processing room (71); however, it may be configured such that a streamer discharge is generated in the processing room (71). In that case, an electric discharge electrode (67) having multiple needle-like tips is disposed opposite the spray nozzle (81), as shown in FIG. 3, and a high voltage is applied across the electric discharge electrode (67) and the spray nozzle (81) by a high-voltage power supply (68). Herewith, a streamer discharge can be generated from the electric discharge electrode (67) using water droplets as a counter electrode. By this means also, it is possible to achieve similar operation and advantages to those of the above embodiment. In addition, integrating the processing room (71) and the streamer discharger (66) allows simple configuration. Furthermore, since the time from generation of the active species to their contact with the water can be shortened compared to the above embodiment, bacteria treatment can be performed also using short-lived active species, such as radicals and excited molecules, efficiently.

Note that the streamer discharge is suitable as an electric discharge method for generating active species having a high performance of bacteria treatment; however, it is also possible to generate active species by adopting other electric discharge methods, such as a silent electric discharge. Therefore, an electric discharge method other than the streamer discharge may be adopted for the discharge device (65).

### (Second Modification)

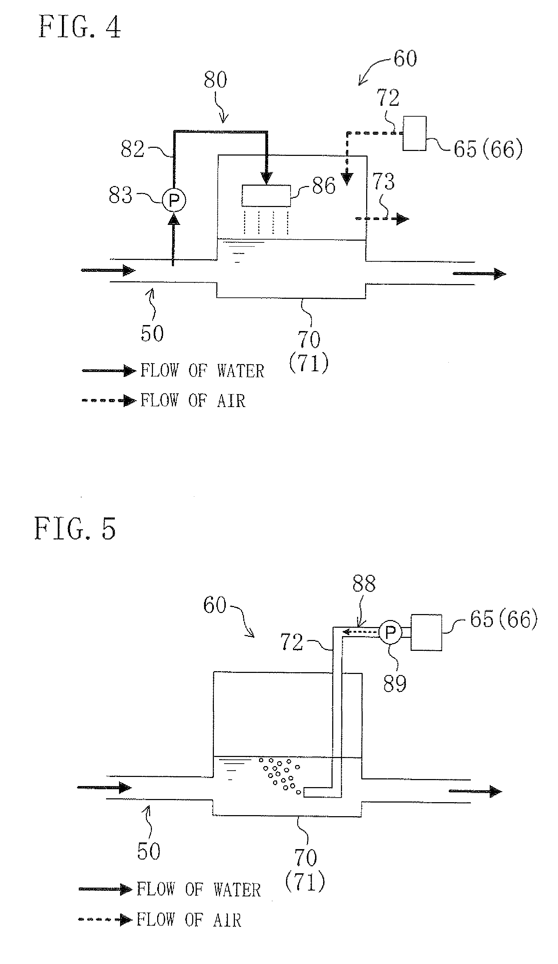

As shown in FIG. 4, for example, a porous solid (86) may be used instead of the spray nozzle (81) of FIG. 2, and water is supplied to the porous solid (86) from above so as to form a water film on the inner surface of the porous solid (86) (a water film forming mechanism (85)). As the porous solid (86), an object may be used, which is formed in such a manner that a water absorbing material (an adsorbent material) is supported on the surface of a substrate having a honeycomb structure with air holes through which air can pass upwards and downwards. With this configuration also, the active species in the air efficiently come into contact with the water because a water film having a substantially large surface area is formed inside the porous solid (86), and the active species are taken up into the water as the interface between the water and the air is disturbed at a place where water from the porous solid (86) drops onto the water surface, and hence it is possible to treat bacteria, such as Legionella, in the water.

### (Third Modification)

A third modification is an example where an air bubble supplier (88) is provided, which supplies a bactericidal component, such as active species, generated by the streamer discharger (66) of the bactericidal component generator (60) into the water together with air bubbles. According to this example, instead of providing the water spraying mechanism (80) of FIG. 2 or the water film forming mechanism (85) of FIG. 4, the air bubble supplier (88) is provided, in which an open end of the air supply passage (72), provided on the processing room (71) side, is disposed in the water of the processing room (71) and an air supply pump (89) is provided at a point in the air supply passage (72), as shown in FIG. 5. The configuration of the streamer discharger (66) is the same as that of the above embodiment illustrated in FIG. 2.

With this configuration, the active species generated in an electric discharge by the streamer discharger (66) are supplied through the air supply passage (72) into the water with air bubbles. When the air bubbles rise in the water, the active species included in the air bubbles come into contact with bacteria, such as Legionella, in the water, and the bacteria are degraded. In this case, if multiple air bubble supply ports are provided in the water, the active species come into contact with the water over a larger region, and hence the bacteria-killing ability is enhanced. In addition, degradation performance due to the active species in the air bubbles being taken up into the water can also be achieved.

### (Fourth Modification)

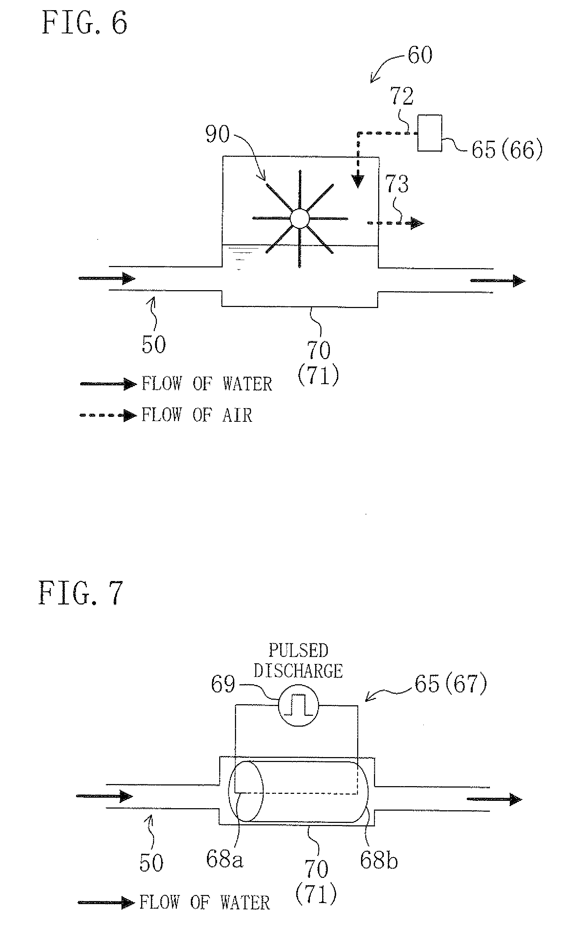

As shown in FIG. 6, a fourth modification is an example of providing a water wheel (90) in the processing room (71) instead of providing the water spraying mechanism (80) of FIG. 2 or the water film forming mechanism (85) of FIG. 4. The streamer discharger (66) including the air supply passage (72) and the air exhaust passage (73) is the same as that of the above embodiment illustrated in FIG. 2. With this configuration, since the interface between the air and the water is disturbed when the water wheel (90) is turned in the processing room (71), the active species supplied to the processing room (71) act on the water over a large region as being taken up into the water, and thus treatment for bacteria, such as Legionella, can be performed. In addition, since the active species in the air come into contact with the water over a wide area due to formation of a thin water film on the surface of the water wheel (90), high degradation performance can be achieved. Furthermore, a second water wheel (not shown), in addition to the above water wheel (90), may be provided in the water. Herewith, the active species can be uniformly dispersed in the water, and hence it is possible to provide stability for bacteria treatment performance.

### (Fifth Modification)

According to the embodiment and each modification above, the streamer discharger (discharge device (65)) (66) is disposed in the air and the processing room (71) separate from the discharge device (65) is provided in the hot water circulation circuit (50), and the active species generated by an electric discharge are brought into contact with the hot water; however, the discharge device (65) (a discharger (66)) may be disposed in the water, as shown in FIG 7.

Specifically, a linear electric discharge electrode (68a) and a tubular counter electrode (68b) positioned therearound, which electrodes (68a and 68b) are included in the discharge device (65), are disposed in the water, and a high-voltage pulse power supply (69) is connected to the electric discharge electrode (68a) and the counter electrode (68b). In addition, the discharge device (65) is disposed in such a manner that the electric discharge electrode (68a) and the counter electrode (68b) are placed in the processing room (processing unit) (71) connected to the hot water circulation circuit (50) and the flow direction of the hot water coincides with the axial directions of the electric discharge electrode (68a) and the counter electrode (68b).

With this configuration, active species, such as ozone, are generated by the electrolysis of water between the electric discharge electrode (68a) and the counter electrode (68b) in the water of the processing room (71). The generated active species act on bacteria, such as Legionella, in the water and degrade these bacteria. According to this configuration, the active species generated in the water directly act on bacteria in the water, and thereby high bacteria-killing ability can be achieved. In addition, since the tubular counter electrode (68b) is disposed around the linear electric discharge electrode (68a), the area of contact between the active species and the water is large, which also contributes to achieving high bacteria-killing ability.

Note that the water including ozone which is generated therein according to the above configuration is so-called "ozone water" and turns back to regular water if left untreated, and there is therefore no need to break down ozone after the generation.

### (Sixth Modification)

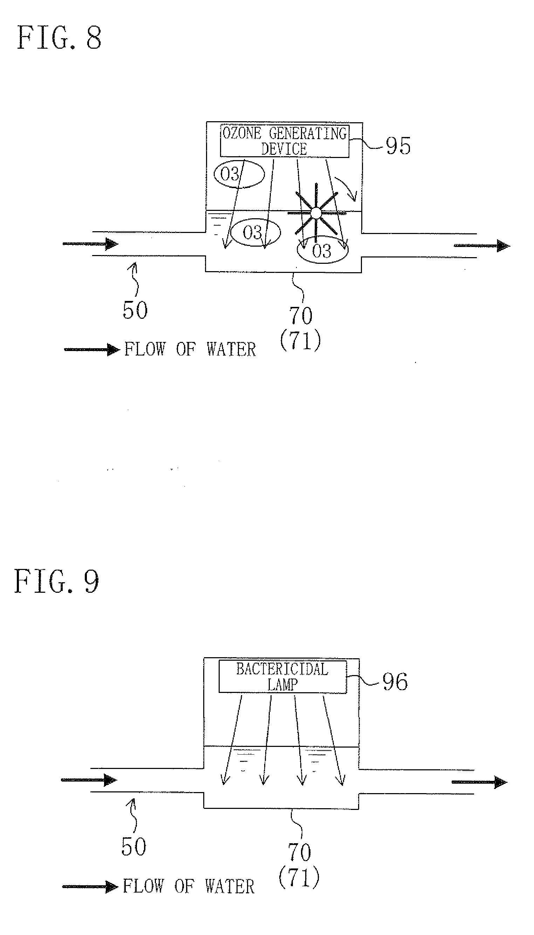

In the above embodiment, an ozone generating device (95) may be used as the bactericidal component generator (60), as shown in FIG. 8. The above discharge device (65) can be referred to as a type of ozone generating device since it generates active species including ozone; however, for the ozone generating device (95), a configuration may be adopted such that a spark, or the like, is generated without an electric discharge to generate ozone at the time of the spark generation. With this configuration also, it is possible to degrade Legionella in the water.

Note that, in this modification, the ozone generating device may be provided separately from the processing room (71), and the air bubble supplier (88) of FIG. 5 may be provided which supplies generated ozone together with air into the water of the processing room (71).

### (Seventh Modification)

In the above embodiment, an ultraviolet light generator (96) may be used as the bactericidal component generator (60), as shown in FIG. 9. The ultraviolet light generator (96) can also be referred to as a type of ozone generating device, and Legionella in the water can be degraded by the effect of ultraviolet light.

Note that, in this modification also, the ultraviolet light generator (96) may be provided separately from the processing room (71), and the air bubble supplier (88) of FIG. 5 may be provided which supplies generated ozone together with air into the water of the processing room (71).

### (Advantages of Each Modification)

Employing the configuration of each modification above makes it possible to prevent the growth of bacteria, such as Legionella, in hot water even if the temperature of the hot water drops, as with the above embodiment illustrated in FIG. 2. Each modification above has also employed a configuration in which active species are generated at a temperature lower than or equal to that of the hot water in the hot water circulation circuit (50), and therefore a smaller amount of energy is required to operate the modification compared to the case of heating the hot water. Accordingly, the modification can be operated with saved energy as compared to the case where a conventional discharge device is used, hence reducing the running cost.

### «Other Embodiment»

The above embodiment may employ a configuration of a modification described below.

For example, although the bactericidal component generator (60) is provided in the hot water circulation circuit (50) in the above embodiment, the bactericidal component generator (60) may also be provided in the reheating circuit (47). The present invention is not limited to hot-water supply systems having a bathtub and/or a reheating circuit, and is applicable to all hot-water supply devices having a circulation circuit on the downstream side of a tank.

The foregoing embodiments are merely preferred examples in nature, and are not intended to limit the scope, applications, and use of the invention.

### INDUSTRIAL APPLICABILITY

As described above, the present invention is useful for heat pump type hot-water supply devices having a hot water storage tank and a hot water circulation circuit.

### DESCRIPTION OF REFERENCE CHARACTERS

- 1: Heat Pump Type Hot-Water Supply Device
- 5: Hot Water Storage Tank
- 10: Heat Pump Thermal Source System
- 50: Hot Water Circulation Circuit
- 60: Bactericidal Component Generator
- 65: Discharge Device
- 66: Streamer Discharger (Streamer Discharge Device)
- 70: Processing Unit
- 80: Water Spraying Mechanism
- 85: Water Film Forming Mechanism
- 88: Air Bubble Supplier
- 95: Ozone Generating Device
- 96: Ultraviolet Light Generator

## Claims

1. A heat pump type hot-water supply device, comprising:
a heat pump thermal source system (10) configured to generate hot water by applying heat to water;
a hot water storage tank (5) configured to store the generated hot water; and
a hot water circulation circuit (50) connected to the hot water storage tank (5), wherein
the hot water circulation circuit (50) includes a bactericidal component generator (60) configured to generate, at a temperature lower than or equal to a temperature of hot water in the hot water circulation circuit (50), a bactericidal component so as to bring about an effect on the hot water.

2. The heat pump type hot-water supply device of claim 1, wherein the bactericidal component generator (60) includes a discharge device (65).

3. The heat pump type hot-water supply device of claim 2, wherein the discharge device (65) is disposed in air, and
the heat pump type hot-water supply device further comprising:
a processing unit (70) connected to the hot water circulation circuit (50) so as to bring active species generated by an electric discharge into contact with the hot water.

4. The heat pump type hot-water supply device of claim 2, wherein
the discharge device (65) is disposed in water, and
the heat pump type hot-water supply device further comprising:
a processing unit (70) connected to the hot water circulation circuit (50) so as to treat the hot water with active species generated by an electric discharge.

5. The heat pump type hot-water supply device of claim 2, wherein the discharge device (65) is a streamer discharge device (66) configured to generate a streamer discharge.

6. The heat pump type hot-water supply device of claim 5, further comprising:
a water spraying mechanism (80); and
a processing unit (70) connected to the hot water circulation circuit (50) so as to bring sprayed water droplets and active species generated by the streamer discharge device (66) into contact with each other.

7. The heat pump type hot-water supply device of claim 5, further comprising:
a water film forming mechanism (85); and
a processing unit (70) connected to the hot water circulation circuit (50) so as to bring a formed water film and active species generated by the streamer discharge device (66) into contact with each other.

8. The heat pump type hot-water supply device of claim 1, wherein the bactericidal component generator (60) is made of an ozone generating device (95).

9. The heat pump type hot-water supply device of claim 1, wherein the bactericidal component generator (60) is made of an ultraviolet light generator (96).

10. The heat pump type hot-water supply device of claim 2, further comprising:
an air bubble supplier (88) configured to supply the bactericidal component generated by the bactericidal component generator (60) into water together with air bubbles.

11. The heat pump type hot-water supply device of claim 8, further comprising:
an air bubble supplier (88) configured to supply the bactericidal component generated by the bactericidal component generator (60) into water together with air bubbles.

12. The heat pump type hot-water supply device of claim 9, further comprising:
an air bubble supplier (88) configured to supply the bactericidal component generated by the bactericidal component generator (60) into water together with air bubbles.

13. A hot water sterilization method used in a heat pump type hot-water supply device including a heat pump thermal source system (10) configured to generate hot water by applying heat to water, a hot water storage tank (5) configured to store the generated hot water, and a hot water circulation circuit (50) connected to the hot water storage tank (5), the hot water sterilization method including the step of:
generating, at a temperature lower than or equal to a temperature of hot water in the hot water circulation circuit (50), a bactericidal component so as to bring about an effect on the hot water circulating in the hot water circulation circuit (50).
